# EUROPÄISCHE PATENTSCHRIFT

(11) **EP 2 129 725 B1**
(45) Veröffentlichungstag und Bekanntmachung des Hinweises auf die Patenterteilung: **26.07.2017**
(21) Anmeldenummer: 08734659.9
(22) Anmeldetag: 19.03.2008
(51) Int. Cl.: C08L 83/04, A61K 6/10

(54) **MASCHINENANMISCHBARES A-SILICONPUTTY UND DESSEN VERWENDUNG**
MACHINE-MIXABLE A-SILICON PUTTY AND THE USE THEREOF
MATÉRIAU À BASE DE MASTIC ET DE SILICONES POUVANT ÊTRE MÉLANGÉ MÉCANIQUEMENT ET SON UTILISATION

(30) Priorität: 30.03.2007 DE 102007015842
(43) Veröffentlichungstag der Anmeldung: 09.12.2009
(73) Patentinhaber: Heraeus Kulzer GmbH, 63450 Hanau (DE)
(72) Erfinder: GRUNWALD, Martin, 50259 Pulheim (DE); DEUTZMANN, Peter, 41569 Rommerskirchen (DE); ESSER, Birgit, 41515 Grevenbroich (DE); HELM, Manfred, 41569 Dormagen (DE)
(74) Vertreter: Bendele, Tanja
(86) Internationale Anmeldenummer: PCT/EP2008/002177
(87) Internationale Veröffentlichungsnummer: WO 2008/119469

(56) Entgegenhaltungen:
- EP-B- 1 372 575

## Beschreibung

Die Erfindung betrifft ein 2-komponentiges additionsvernetzendes Siliconmaterial mit Putty Konsistenz und dessen Verwendung.

### Technischer Hintergrund

Wenn es darum geht, dass Abformungen von Gegenständen angefertigt werden, deren Dimensionen die ursprüngliche Situation möglichst exakt wiedergeben sollen, werden additionsvernetzende Silicone wegen Ihrer besonderen Dimensionstreue bevorzugt angewandt. Mit diesen Materialien gelingt die Herstellung von passgenauen Restaurationen, zum Beispiel im Dental- oder otoplastischen Bereich, Gleichermaßen sind diese Abformmaterialien aufgrund ihrer Materialeigenschaften und der physiologischen Unbedenklichkeit gut geeignet zur Abformung in der Orthopädietechnik, zur Anfertigung von Epithesen, aber auch zur Anfertigung von genauen Formen in der technischen Modellherstellung sowie bei der Reproduktion von Oberflächen, unter anderem der Abformung von Kunstgegenständen. Solche additionsvemetzenden Silicone werden, insbesondere wenn sie bezüglich der Abbindecharakteristik schnell abbinden sollen (zum Beispiel bei der Abformung am Menschen), häufig als 2-Komponenten (2K)-Systeme angeboten, die vor der Anwendung gemischt werden müssen.

Additionsvemetzende Silicon-Abformmassen werden in verschiedenen Viskositäten angeboten. Aus Gründen der besseren und einfacheren Applikation sind insbesondere automatisch anmischbare 2K-Systeme bevorzugt. Niedrigviskose Massen lassen sich dabei leicht in Statikmischern anmischen, wenn die Materialien aus Kartuschen mittels einer Handpistole ausgefördert werden. Für höherkonsistente Materialien gibt es marktübliche Mischmaschinen (wie zum Beispiel Dynamix®- (Heraeus Kulzer), Mixstar®- (DMG) oder auch Pentamix®- (3 M ESPE) Geräte), die mittel- und hochviskose Pasten ausfördem und in einem dynamischen Mischer mischen können. Naturgemäß sind knetbare und unmittelbar nach dem Mischvorgang klebfreie Sili con"knet"massen (Putties) besonders schwer ausförder- und mischbar (mögliche Mischmaschinen sind unter anderem unter [0013] in EP 1502572 A1 (Seite 3) aufgeführt).

Diese "knetbaren" Materialien, die in der DIN EN ISO 4823 als Typ 0 beschrieben werden, sind für viele Bereiche anwendbar, insbesondere immer dann, wenn es darauf ankommt, eine standfeste, gegebenenfalls modellierbare, klebfreie Masse vorliegen zu haben.

Dies ist zum Beispiel in der zahnärztlichen Praxis bei der Abdrucknahme mittels Sandwich- oder 2-phasiger Korrekturtechnik wichtig (aber auch zum Beispiel in der Defektabformung in Orthopädie/Epithesenanfertigung beziehungsweise nach Anpassung an die spezifischen Eigenschaften auch in der Gehörgangabformung). Die Putty-Materialien sind nach der Anmischung standfest (Konsistenz nach DIN EN ISO 4823:2000 < 35 mm), dürfen sich bei Abdrucknahme nicht "durchdrücken" und müssen unmittelbar nach der Anmischung klebfrei sein, damit das Material manuell geformt werden kann.

Weitere grundsätzliche Erfordernisse und Eigenschaften sind zum Beispiel EP 1 502 572 A1, EP 1 372 575 B1 (3M ESPE) und WO 02/058641 (Kettenbach) beschrieben.

Es hat nicht an Versuchen gefehlt, maschinenmischbare Putties bereitzustellen:

### Stand der Technik

WO 02/058641 (Kettenbach) beschreibt ein Material, das mehrstufig abbindet, und zwar indem eine additionsvernetzende Abbindung als 2. Stufe die Endeigenschaften gewährleistet und als 1. Stufe eine Kondensationsabbindung vorgeschaltet ist, so dass der Förder- und Mischvorgang auf einer niedrig konsistenten 1. Stufe stattfindet und die Endeigenschaften sich erst später ausbilden. Mögliche Nachteile dieser Massen bezüglich der Langzeitstabilität sind in EP 1 502 572 A1 genannt.

EP 1 502 572 A1 (3M ESPE) beschreibt selbst auch die Kombination von Additions- und Kondensationsabbindemechanismus (und beschreibt einige Einschränkungen in der Anwendung von EP 1 372 575 B1), wobei auch hier die Schwierigkeit bleibt, zwei verschiedene Reaktionsmechanismen nebeneinander lagerstabil zu halten und genau zu steuern.

Wie bereits erwähnt, sind bezüglich der Genauigkeit und der physiologischen Unbedenklichkeit reine additionsvernetzende maschinenmischbare Silicon-Putty-Materielien besonders erstrebenswert. Diese werden in EP 1 372 575 B1 (3M ESPE) beschrieben (in EP 1 502 572 A1/Seite 3. [0011] wird jedoch auf DE 101 16 223 aufmerksam gemacht und auf die Tatsache, dass hierfür in der Regel Modifikationen des Automixsystems notwendig sind, was beim 3M ESPE-Produkt Express Penta Putty durch einen neuen dynamischen Mischertyp und eine spezielle Stützkartusche mit Metallverstärkung auch tatsächlich notwendig Ist). EP 1 372 575 B1 beschreibt eine Zusammensetzung eines additionsvernetzenden Silicons (= A-Silicon), die aus
(1) 1 - 35 % Organopolysiloxanen mit 2 ungesättigten Gruppen im Molekül,
(2) 1 - 10 % mindestens eines Organohydrogenpolysiloxan mit ≥ 2 SiH-Gruppen/Molekül,
(3) 0,00005 - 0,05 % Pt-Katalysator (berechnet auf Pt).
(4) 4 - 10 % Paraffinöl oder weißes Mineralöl oder Gemische und
(5) 50 - 90 % mindestens eines Füllstoffes
besteht, wobei Merkmal a) aus
- mindestens einem Organopolysiloxan mit einer Viskosität von 25 - 1.000 mPas und
- mindestens einem Organopolysiloxan mit einer Viskosität von 60.000 - 500.000 mPas
besteht; fernerhin besitzt diese Zusammensetzung in mindestens einer der beiden Komponenten eine nach einem in der Schrift definierten Verfahren gemessenen Brookfield-Viskosität von 800 - 2.000 Pas und eine Konsistenz ≤ 35 mm nach ISO 4823 (= Typ 0).

Aus der Offenbarung der EP 1 372 575 B1 geht hervor, dass das Vorhandensein der hochviskosen Komponente des Merkmals a) essentiell ist, ebenfalls ist der Paraffingehalt nach oben begrenzt (≤ 10,0 %).

Wie bereits erwähnt, benötigen solche Zusammensetzungen trotzdem, um für das Automixsystem geeignet zu sein, spezielle Anpassungen des Equipments. Es wäre daher wünschenswert, ein leichter ausförderbares, einheitlich maschinengängiges 2K-A-Silicon-Putty vorliegen zu haben, das "echte" Putty-Eigenschaften aufweist (Führung, kein Durchbeißen bei Anwendung, direkt nach Mischvorgang klebfrei formbar/modellierbar, Konsistenz nach DIN EN ISO 4823:2000 ≤ 35 mm (= Typ 0)), ohne dass besondere Maßnahmen an dem üblichen Equipment notwendig sind.

### Beschreibung der Erfindung

Überraschenderweise wurde gefunden, dass auch ein Material ohne hochviskose Anteile des Merkmals a) des oben beschriebenen additionsvernetzenden Silicons der EP 1 372 575 B1 diese guten Putty-Eigenschaften zeigt, und dass auch Varianten mit Paraffingehalten > 10 % nicht zu problematischen, öligen A-Sllicon-Putty-Oberflächen führen.

Eine zweikomponentige maschinenanmischbare additionsvernetzende Silicone-Putty-Zusammensetzung enthaltend die folgenden Bestandteile 1) bis 5) erfüllt die oben genannten Eigenschaften (wie zum Beispiel Konsistenzen nach DIN EN ISO 4823:2000 ≤ 35 mm, direkt nach Mischung klebfrei):
(1) 25 - 35 Gew.-% Organopolysiloxane mit mindestens zwei ungesättigten Gruppen je Molekül, mit einer Viskosität von 500 - 20.000 mPas,
(2) 3- 8 Gew.-% mindestens eines Organohydrogenpolysiloxans mit mindestens 2 SiH-Gruppen im Molekül,
(3) 7 - 11 Gew.-% mindestens eines Paraffinöls,
(4) 50 - 70 Gew.-% mindestens eines Füllstoffs,
(5) 0,00001 - 0,04 Gew.-% eines Pt-haltigen Hydrosilierungskatalysators, berechnet als Pt, und
gegebenenfalls weitere übliche Hilfsstoffe, wie zum Beispiel Trocknungsmittel, Mittel zur Verminderung von Gasschäden, Farbmittel, Strukturmittel, Opaker, Mattierungsmittel, Verdünner, Vaselinen, Inhibitoren, Antioxidationsmittel, Geruchsstoffe.

Die Erfindung betrifft auch ein 2-komponentiges additionsvernetzendes Silicon-Putty-Material enthaltend
(1) 26,5 Gew.-% Organopolysiloxane mit mindestens zwei ungesättigten Gruppen je Molekül, mit einer Viskosität von 500 - 20.000 mPas,
(2) 4,17 Gew.-% mindestens eines Organohydrogenpolysiloxans mit mindestens 2 SiH-Gruppen im Molekül,
(3) 8,5 Gew.-% mindestens eines Paraffinöls,
(4) 59,41 - 61,6 Gew.-% mindestens eines Füllstoffs,
(5) 0,01 Gew.-% eines Pt-haltigen Hydrosilierungskatalysators, berechnet als Pt, und gegebenenfalls weitere übliche Hilfsstoffe.

Zu 1): Organosiloxane mit mindestens 2 ungesättigten Gruppen können durch die allgemeine-Formel

R¹-SiR²-(OSiR²₂]ₙ[OSiR²R¹]ₘ-OSiR²₂R¹

dargestellt werden, worin
R¹ = Alkylengruppe, vorzugsweise Vinyl
R² = Alkylgruppe ohne Mehrfachbindung, vorzugsweise Methyl
n > 1
m ≥ 0.

Komponente 1) ist bevorzugt mindestens ein Diorganopolysiloxan mit terminalen Triorganosiloxygruppen, von denen mindestens eine Vinylgruppe ist.

Bevorzugte Diorganopolysiloxane dieser Struktur haben die folgende Formel:

CH₂=CH (-SiR²-O) n-SiR₂-CH=CH₂

in der R eine unsubstituierte oder substituierte monovalente Kohlenwasserstoffgruppe repräsentiert, die bevorzugt frei von aliphatischen Mehrfachbindungen ist und n eine ganze Zahl darstellt. Bevorzugt sind mindestens 50% der Reste R Methylgruppen. Beispiele für andere Gruppen R sind Ethyl-, Vinyl-, und 3,3,3 Trifluorpropylgruppen. Der Wert von n wird bevorzugt so gewählt, dass das Polymer bei 25°C eine Viskosität im Bereich von 500 mPas - 50.000 mPas aufweist. Derartige Moleküle sind zB in der US 4,035,453 (Wacker) beschrieben.

Die Herstellung der Komponente 1) erfolgt nach üblichen Verfahren, die beispielsweise in W. Noll, "Chemie und Technologie der Silikone", Verlag Chemie Weinheim, 2. Auflage 1964. Seite 162-206, dargestellt sind.

Besonders bevorzugt sind lineare Polydimethylsiloxane oblger Struktur mit den angegebenen Viskositätsbereichen, bei denen die Endgruppen aus Dimethylvinylsiloxyeinheiten bestehen und die weiteren Substituenten R in der Kette aus Methylgruppen bestehen.

Zu 2): Organohydrogenpolysiloxan mit mindestens 2 SiH-Gruppen, dargestellt durch die allgemeine Formel:

R-SiR²-[OSiHR²]ₒ[OSiH₂]ₚ-OSiR²₂-R

mit R = H oder R²
o ≥ 1
p ≥ 0.

Komponente 2) ist bevorzugt ein Organopolysiloxan mit mindestens 2 Si-gebundenen Wasserstoffatomen pro Molekül. Dieses Organopolysiloxan enthält bevorzugt 0,01 bis 2 Gew.-% siliciumgebundenen Wasserstoff. Die Silikonvalenzen, die nicht mit Wasserstoff- oder Sauerstoffatomen abgesättigt sind, werden mit monovalenten Kohlehwasserstoffradikalen abgesättigt, die frei von aliphatischen Mehrfachbindungen sind. Die Kohlenwasserstoffradikale können substituiert oder unsubstituiert sein. Mindestens 50%, bevorzugt 100% der Kohlenwasserstoffradikale, die an Siliciumatomen gebunden sind, bestehen aus Methylradikalen. Die Herstellung auch derartiger Komponenten sind in den unter 1) genannten Literaturstellen hinsichtlich Struktur und Herstellung beschrieben.

Die Mengenverhältnisse der Komponenten 1) und 2) sind bevorzugt derart gewählt, dass pro Mol an ungesättigter Doppelbindung der Komponente 1) 0,75 bis 5 Mol SiH-Einheiten aus der Komponente 2) vorliegen. Die Summe der Komponenten 1) und 2) liegen im Bereich von 10 bis 40 Gew.-%, bevorzugt von 15 bis 25 Gew.-%, bezogen auf das Gesamtgewicht aller Komponenten.

### Zu 3) Paraffinöl:

Komponente **3)** ist ein Paraffinöl oder weißes Mineralöl, das ein bei Raumtemperatur flüssiges Gemisch von Alkanen mit einer Viskosität von vorzugsweise 100 bis 400 mPa.s bei 20°C, besonders bevorzugt 120 bis 300 mPa.s, ganz besonders bevorzugt zwischen 120 bis 250 mPa.s darstellt *(Paraffinum liquidum).* Bevorzugt werden dabei Qualitäten eingesetzt, die beispielsweise durch Hydrierung von aromatischen polycyclischen Kohlenwasserstoffen weitgehend befreit sind. Die Paraffinbestandteile entsprechen gewöhnlich der Formel CₙH₂ₙ₊₂. n nimmt dabei bevorzugt Werte von 15 bis 50 an.

### Zu 4) Füllstoff:

Als Füllstoffe können sowohl verstärkende als auch nicht verstärkende Füllstoffe verwendet werden. Die verwendeten Füllstoffe können oberflächenbehandelt sein oder auch nicht.

Typische nicht verstärkende Füllstoffe sind Quarze, Cristobalite, Diatomeenerden, Kieselgure, Schichtsilikate (Bentonite), Calciumcarbonate, Talkum, Zeolithe, Montmorillonite, Natriumaluminiumsilikate, Metalloxide wie Aluminium- oder Zinkoxid bzw. deren Mischoxide, Glaspulver. Diese Füllstoffe können durch Oberflächenbehandlung hydrophobiert sein. Zusätzlich sind Kunststoff- oder Glashohlkugeln zu nennen. Es kommen auch faserförmige Füllstoffe in Frage. Die Füllstoffe können auch röntgenopak sein, wie z.B. Zirkonium- oder Bariumverbindungen.

Die einsetzbaren nicht-verstärkenden Füllstoffe sind bevorzugt solche mit einer BET-Oberflache von bis zu 50 m²/g. Weitere Beispiele sind Calciumsilikat, Zirkoniumsilikat, Bariumsulfat, Gips, Kunststoffpulver. Besonders bevorzugt sind Quarz, Cristobalit und Natriumaluminiumsilikate, die oberflächenbehandelt sein können.

Verstärkende Füllstoffe können zum Beispiel Kieselgele, pyrogene oder Fällungskieselsäuren, Siliciumaluminiummischoxide sein.

Vorzugsweise werden Mischungen verschiedener Füllstoffe eingesetzt.

### Zu 5) Der Pt-haltige Hydrosilierungskatalysator

Dies ist bevorzugt ein Platinkomplex, der z.B. aus Hexachloroplatinsäure durch Reduktion mit Tetramethyldivinyldisiloxan hergestellt werden kann. Geeignet sind aber auch andere Platinverbindungen, die die Additionsvernetzung beschleunigen. Gut geeignet sind beispielsweise solche Platin-Siloxan-Komplexe, wie sie in US 3,715,334, US 3,775,352 und US 3,814,730 beschrieben sind. Der Platinkatalysator wird vorzugsweise In Mengen im Bereich von 0,00005 bis 0,05 Gew.-%, insbesondere im Bereich von 0,0002 bis 0,04 Gew.-%, besonders bevorzugt im Bereich von 20 bis 100 Gewichts-ppm und weiter besonders bevorzugt im Bereich von 25 bis 60 Gewichts-ppm, jeweils berechnet als elementares Platin, bezogen auf das Gesamtgewicht aller Bestandteile der Silikonabformmasse, eingesetzt. Sollte es zweckmäßig erscheinen, können zwei oder mehr Platinkatalysatoren eingesetzt werden.

### Zu 6) Hilfsmittel bzw. Hilfsstoffe

Hilfsstoffe können zum Beispiel Trocknungsmittel, Mittel zur Verminderung von Gasschäden, Farbmittel, Strukturmittel, Opaker, Matlierungsmittel, Verdünner, Vaselinen, Inhibitoren, Antioxidationsmittel, Geruchsstoffe sein. Es kommen auch Weichmacher oder Trennöle, wie Polydimethylsiloxan-Ole, ohne reaktive Alkenyl- oder SiH-Gruppen mit einer Viskosität von vorzugsweise 0,001 - 10 Pa.s bei 25 °C in Frage. Darüber hinaus können zusätzliche Formtrennmittel wie Fettsäure- oder Fettalkoholderivate oder Extrusionshilfsmittel, wie PTFE-Pasten Verwendung finden. Die Stabilität nach Heißlufteinwirkung lässt sich beispielsweise mit bekannten Heißluftstabilisatoren, wie Fe-, Ti-, Ce-Verbindungen, organischer Salze davon oder ihrer organischen Komplexe erhöhen. Weiterhin können auch organische Farbstoffe, wie trübende oder nicht trübende Farbstoffe enthalten sein. Es kommen auch Zeolithe, Pd auf Trägermaterial, Farbpigmente, hydriertes Rhlzinusölderivat als Strukturmittel, kurzkettige oder zyklische Siliconverbindung wie Vinyl-D₄ oder Vinyl-M₂ als Inhibitor, und Antioxidationsmittel in Betracht.

Die Erfindung betrifft ein 2-komponentiges additionsvernetzendes Silicon-Putty-Material enthaltend
1) 25 - 35 Gew.-% eines oder mehrerer Organopolysiloxane mit mindestens 2 ungesättigten Gruppen pro Molekül, wobei diese eine Viskosität zeigen von 500 mPas - 20.000 mPas,
2) 3 - 8 Gew.-% Organohydrogenpolysiloxan mit mindestens 2 SiH-Gruppen im Molekül,
3) 7 - 11 Gew.-% Paraffinöl,
4) 50 - 70 Gew.-% Füllstoffe,
5) 0,001 - 0,04 Gew.-% eines Pt-haltigen Hydrasilierungskatalysators, berechnet als Pt.

Zusätzlich können Hilfsstoffe aus der Gruppe der Zeolithe, Pd auf Trägermaterial, Farbpigmente, hydriertes Rhizinusölderivat als Strukturmittel, kurzkettige oder zyklische Siliconverbindung wie Vinyl-D₄ oder Vinyl-M₂ als Inhibitor, Geruchsstoff, Antioxidationsmittel anwesend sein.

Die Zusammensetzungen haben vorzugsweise die Form von zwei Pasten und beginnen die Abbindereaktion durch Vermischen.

Um die Materialien lagerstabil zu halten, werden die Komponenten 1), 2) und 5) zweckmäßigerweise nicht zusammen in derselben Paste aufbewahrt, da dies zu einer vorzeitigen Aushärtung führen kann.

In einer bevorzugten Ausführungsform werden die 2-komponentigen Formulierungen hinsichtlich der Einsatzstoffe so aufgeteilt, dass
Paste A Bestandteile gemäß 1), 2), 3). 4) und 6) enthält sowie
Paste B Bestandteile gemäß 1), 3). 4), 5) und 6).

Grundsätzlich sind sämtliche Mischungsverhältnisse zwischen A und B als geeignet zu betrachten, bevorzugt 1 - 10 Volumenteil A mit 1 - 10 Volumenteil B. In der Praxis orientiert sich an den üblichen, zum Teil zuvor genannten, etablierten Mischsystemen (Mischmaschine und den dafür konzipierten dynamischen Mischem). Als Primärpackmittel sind alle Packmittel, in denen die Einzelpasten lagerstabil sind, denkbar. In der Praxis haben sich (5 : 1)-Hartkartuschen (circa 380 ml) beziehungsweise (5 : 1)-Schlauchbeutelsysteme (circa 360 ml) bewährt.

Geeignete Kartuschen- und Schlauchbeutelsysteme sind in EP 0 787 655, EP 1 121 195, EP 1 227 049; EP 0 787 655, DE202005000929U1, DE102005061921A1, DE102005007055A1 , E102005002850A1, DE000029822967U1, DE000029724380U1, DE000029602111U1, und DE000010021467A1 beschrieben. Bekannte kommerzielle Systeme sind 380 ml Hartkartuschen (5:1) und das Magnum 360-Schlauchbeutelsystem (Heraeus Kulzer).

### Anwendungsbereiche:

Die Zusammensetzung der Erfindung kann wie folgt Verwendung finden:
1. Vor allem als Putty in der zahnärztlichen Praxis als Abformmaterial (Vorteil: komfortables Mischen, keine Kontamination zwischen Base und Cat. wie beim manuellen Mischen, keine Materialvergeudung (nur soviel wird gefördert wie notwendig), homogene, blasen- und streifenfreie Mischung, keine Inhibition durch unter Umständen ungeeignete Handschuhe) in allen dortigen Putty-Indikationen. Die Kombination auch mit niedrigviskosen Korrekturmaterisliens ist problemlos möglich.
2. Verwendung im Dentallabor ("Lab Putty", zum Beispiel zum Ausblocken, zur Herstellung von Vorwällen etc.).
3. Bei der Abformung von Defekten am Gesichtsschädel, an Gliedmaßen, am Rumpf von Menschen zur Anfertigung von individuellen Körperersatzteilen oder Hilfsmitteln (wie orthopädischen Einlagen).
4. Bei der Abformung von Oberflächen/Gegenständen, gegebenenfalls in Kombination mit Korrekturmaterialien.
5. Bei der Abformung von biologischem Substrat, zum Beispiel in der Tierheilkunde.
6. Das Material lässt sich gegebenenfalls in weicherer Einstellung (zum Beispiel durch Zusatz von Vaseline) auch direkt aus einer Spritze fördern und ist aus dieser heraus auch als Abformmaterial, zum Beispiel für Ohrabformungen, geeignet.
7. Die aus der Maschine geförderten Materialien sind analog den bekannten handangemischten A-Silicon-Putty-Materialien anwendbar, das heißt, sie können normal beschnitten, desinfiziert, gereinigt, gelagert, mit Modellmaterial ausgegossen beziehungsweise auch mit Korrekturmaterial verwendet werden.

### Beispiel:

Die nachfolgend aufgeführten Beispiele sollen die Erfindung verdeutlichen, ohne diese einzuschränken:

| **Paste A (5 Teile)** | **Paste B (1 Tell)** | **Angaben in [Gew.-%]** |
|---|---|---|
| 26,50 | 29,00 | Organopolysiloxan mit endständigen Vinylgruppen, Viskosität 20.000 mPas |
| 5,00 | - | Organohydrogenpolysiloxan |
| 8,50 | 8,50 | Paraffinöl |
| - | 0,50 | Pt-Katalysatorzubereitung (4%ig Pt) |
| 56,91 | 61,60 | SiO₂-Füllstoffe, zum Teil oberflächenbehandelt |
| 2,50 | - | Füllstoff, Glashohlkugel |
| 0,07 | - | Farbstoffanreibungen |
| 0,06 | - | Antioxydationsmittelhaltige Vormischung |
| 0,06 | - | Pd-haltige Zubereitung |
| 0,40 | 0,40 | Strukturmittel |
| - | + 0,16 | Zugabe Inhibitorzubereitung (20 % Wirkstoffgehalt) zur Kinetikeinstellung |

Die angegebenen Pasten werden in Laborknetern hergestellt. Die Materialien werden zu Testzwecken in Polypropylen-Hartkartuschen (B : C = 5 : 1) mit 380 ml Inhalt abgefüllt und mit einem zugehörigen Mischer in einer Pentamix 2-Maschine gemischt. Es ergeben sich folgende Eigenschaften, die dem Fachmann die Eignung der Materialen deutlich machen:

**Physikalische Eigenschaften**

| | |
|---|---|
| Konsistenz gemäß DIN EN ISO 4823:2000: | 33 mm (Typ 0) |
| Verarbeitungszeit (osz. Rheometer): | 3,0 min |
| Abbindezeit (osz. Rheometer): | 4,3 min |
| Rückstellung nach Verformung: | 99,6 % |
| Verformung unter Druck: | 1,6 % |
| Detailreproduktion: | 20 µm Linie wird wiedergegeben |
| Gipsverträglichkeit: | 20 µm Linie wird wiedergegeben |
| Schrumpf: | 0,2 % |
| Shore A (10 min/1 h): | 66/67 |
| Gasschädenfrei ausgießbar nach: | ≥ 15 min |
| Manuell formbar ohne Oberflächenklebrigkeit/Anhaftung: | sofort nach dem Mischen |
| Durchdrücken bei Abdrucknahme: | nein |
| Förderung aus der Mischmaschine: | problemlos |
| Führung bei Abdrucknahme: | gut |
| Beschneidbarkeit: | gut |

## Patentansprüche

1. 2-komponentiges additionsvernetzendes Silicon-Putty-Material enthaltend
- 25 - 35 Gew.-% Organopolysiloxane mit mindestens zwei ungesättigten Gruppen je Molekül, mit einer Viskosität von 500 - 20.000 mPas,
- 3 - 8 Gew.-% mindestens eines Organohydrogenpolysiloxans mit mindestens 2 SiH-Gruppen im Molekül,
- 7 - 11 Gew.-% mindestens eines Paraffinöls,
- 50 - 70 Gew.-% mindestens eines Füllstoffs,
- 0,00001 - 0,04 Gew.-% eines Pt-haltigen Hydrosllierungskatalysators, berechnet als Pt,
- gegebenenfalls weitere Hilfsstoffe,

2. Silicon-Putty-Material nach Anspruch 1 , das sich durch automatische Anmischmaschinen ausfördern und mischen lässt, danach sofort eine klebfreie und formbare Oberfläche aufweist und eine Konsistenz ≤ 35 mm nach DIN EN ISO 4823:2000 zeigt.

3. Verwendung von Silicon-Putty-Material nach mindestens einem der vorstehenden Ansprüche zur Herstellung zahnärztlichen Abformmaterials oder Abformmaterials für andere Körperabformungen.

4. Verwendung nach Anspruch 4 zur Herstellung von Abformmaterial für Ohrabformungen.

5. Verwendung von Silicon-Putty-Material nach mindestens einem der vorstehenden Ansprüche für Abformungen Im zahntechnischen Labor oder zur Abformung von technischen oder kunstgegenständlichen Oberflächenstrukturen.

## Claims

1. 2-component addition crosslinking silicone putty material comprising
- 25 - 30 % by weight organopolysiloxanes having at least two unsaturated groups per molecule, having a viscosity of 500 - 20000 mPas,
- 3 - 8 % by weight of at least one organohydrogenpolysiloxane having at least 2 SiH groups in the molecule,
- 7 - 11 % by weight of at least one paraffin oil,
- 50 - 70 % by weight of at least one filler,
- 0.00001 - 0.04 % by weight of a Pt-containing hydrosilylation catalyst, calculated as Pt,
- optionally further excipients.

2. Silicone putty material according to claim 1, which is dischargeable and mixable by automatic mixing machines, immediately afterwards having a non-sticky and malleable surface with a consistency ≤ 35 mm according to DIN EN ISO 4823:2000.

3. Use of a silicone putty material according to at least one of the preceding claims for the production of a dental impression material or of an impression material for other body impressions.

4. Use according to claim 4 for the production of impression material for ear impressions.

5. Use of a silicone putty material according to at least one of the preceding claims for Impressions in the dental laboratory or for Impression taking of technical surface structures or figurative surface structures of art objects.

## Revendications

1. Matériau silicone de mastic à deux composantes réticulant par addition, comprenant
- 25 - 30 % en poids des organopolysiloxanes ayant au moins deux groups insaturés par molécule, ayant une viscosité de 500 - 20000 mPas,
- 3 - 8 % en poids d'au moins une organohydrogènpolysiloxane ayant au moins deux SiH groupes dans la molécule,
- 7 - 11 % en poids d'au moins une huile de paraffine,
- 50 - 70 % en poids d'au moins une matière de remplissage,
- 0,00001 - 0,04 % en poids d'un catalyseur d'hydrosilylation contenant du Pt, calculées sous la forme du Pt,
- éventuellement des autres excipients.

2. Matériau silicone de mastic selon la revendication 1, qui est déchargeable et mélangeable par des mélangeurs automatiques, immédiatement après ayant une surface non collante et malléable avec une consistance ≤ 35 mm selon DIN EN ISO 4823:2000.

3. Utilisation d'un matériau silicone de mastic selon au moins une des revendications précédentes pour la production d'une matière d'empreinte dentaire ou d'une matière d'empreinte pour des autres empreintes des corps.

4. Utilisation selon la revendication 4 pour la production d'une matière d'empreinte pour des empreintes de l'oreille,

5. Utilisation d'un matériau silicone de mastic selon au moins une des revendications précédentes pour des empreintes dans le laboratoire dentaires ou pour la prise d'empreinte des structures de surface techniques ou des structures de surface figuratives des objets d'art.
